# EUROPÄISCHE PATENTSCHRIFT

(11) **EP 2 725 956 B1**
(45) Veröffentlichungstag und Bekanntmachung des Hinweises auf die Patenterteilung: **20.01.2016**
(21) Anmeldenummer: 12728589.8
(22) Anmeldetag: 21.06.2012
(51) Int. Cl.: A47L 9/16, A47L 9/00, B04C 5/103, B01D 45/08, B01D 45/12, B04C 5/107, B04C 5/181

(54) **WIRBELROHRABSCHEIDER MIT LUFTFÜHRUNGSMITTEL**
SWIRL TUBE SEPARATOR WITH AIR GUIDE
TUBE SÉPARATEUR À VORTEX AVEC DISPOSITIF DE GUIDAGE

(30) Priorität: 30.06.2011 DE 102011078406
(43) Veröffentlichungstag der Anmeldung: 07.05.2014
(73) Patentinhaber: BSH Hausgeräte GmbH, 81739 München (DE)
(72) Erfinder: SEITH, Thomas, 97616 Bad Neustadt (DE); FEHN, Daniel, 96358 Teuschnitz (DE)
(86) Internationale Anmeldenummer: PCT/EP2012/061908
(87) Internationale Veröffentlichungsnummer: WO 2013/000801

(56) Entgegenhaltungen:
- WO-A1-00/21428
- DE-A1- 3 009 214
- DE-A1- 3 624 086
- DE-A1-102005 017 274

## Beschreibung

### Gebiet der Erfindung

Die Erfindung betrifft einen Wirbelrohrabscheider für einen Staubsauger, wobei der Wirbelrohrabscheider einen Abscheideraum, einen Sauglufteinlass, durch den mit Staubpartikeln beaufschlagte Saugluft in den Abscheideraum eintreten kann, eine Staubauswurföffnung, durch die ein Staubanteil der Saugluft, wenn diese im Abscheideraum rotiert, aufgrund der Zentrifugalkraft aus dem Abscheideraum austreten kann, einen Saugluftauslass, durch den die von dem Staubanteil befreite Saugluft aus dem Abscheideraum austreten kann, und einen Apexkegel, um aus der Richtung des Sauglufteinlasses kommender Saugluft in Richtung des Saugluftauslasses umzulenken, umfasst.

### Hintergrund der Erfindung

Aus der Technik sind Staubsauger mit Wirbelrohrabscheidern bekannt, bei denen Saugluft an einem Ende in einen rohrförmigen Abscheideraum eintritt und sich dann spiralförmig zu dem anderen Ende des Abscheideraums bewegt. Dort kann ein Staubanteil der Saugluft aufgrund der Zentrifugalkraft durch eine Staubauswurföffnung aus dem Abscheideraum austreten. Außerdem wird die Saugluft mit Hilfe eines Apexkegels in einen Innenbereich des Abscheideraums und wieder in Richtung des einen Endes geführt, wo sie schließlich durch ein Tauchrohr aus dem Abscheideraum abgeleitet wird.

Die Patentschrift EP 1 173 086 B1 offenbart eine Einrichtung zum Vermindern des Druckverlusts in einer Zyklonstaubsammelvorrichtung, bei der dem Tauchrohr gegenüberliegend ein Laminarstrommittel angeordnet ist, das die rotierende Saugluft laminarisieren soll, sodass sie ihre rotierende Kraft verliert, bevor sie in das Tauchrohr eintritt. Das Laminarstrommittel ist ein langgestrecktes Element mit einem kreuzförmigen Querschnitt.

Auch die Offenlegungsschrift DE 36 24 086 A1 offenbart einen Zyklonabscheider, bei dem Druckverluste vermindert werden sollen. Hierzu ist eine kegelförmige Wirbelstütze mit als Führungsflächen dienenden Leitschaufeln ausgestattet. Sie soll eine Verstärkung der Axialkomponente der Strömung des Zentralwirbels auf Kosten der Radialkomponente bewirken. Die Leitschaufeln können dabei auch in einen Gasaustrittsstutzen, hinein verlängert werden.

Die Offenlegungsschrift DE 10 2005 017 274 A1 schließlich offenbart einen Staubsauger mit einer Zyklontrennvorrichtung, deren Luftabgaberohr mit lärmreduzierenden Rippen ausgestattet ist. Diese Lärmreduzierungsrippen treten auf einer Innenwand des Luftabgaberohrs in Richtung Mitte des Luftabgaberohrs hervor und haben neben einer lärmreduzierenden auch eine den Druckverlust senkende Wirkung.

Weiter sei noch auf die DE 30 09 214 A1 hingewiesen.

### Der Erfindung zugrundeliegende Aufgabe

Der Erfindung liegt die Aufgabe zugrunde, einen verbesserten Wirbelrohrabscheider für einen Staubsauger bereitzustellen. Vorteilhafterweise soll das Verhältnis von Staubabscheidung, insbesondere Feinstaubabscheidung, und Druckverlust verbessert werden. Außerdem soll das Verhältnis zwischen Staubabscheidung und Geräuschentwicklung verbessert werden.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch einen Wirbelrohrabscheider für einen Staubsauger mit den Merkmalen des Anspruchs 1. Dadurch, dass das Luftführungsmittel an dem Apexkegel angeordnet ist, kann die Rotation der Saugluft während oder kurz nach der Umlenkung am Apexkegel beeinflusst werden. Diese frühzeitige Beeinflussung kann nach Erkenntnis der Erfinder insbesondere ausgenutzt werden, um die Rotation der Saugluft in einer Weise zu bremsen, die einem Druckverlust besonders effektiv entgegen wirkt und außerdem zur Geräuschreduzierung beitragen kann. Andererseits kann dadurch, dass die Staubauswurföffnung sich höchstens zu 50% ihrer Höhe über einen Abschnitt des Luftführungsmittels erstreckt, erreicht werden, dass die Rotation nicht zu früh gebremst wird und dadurch die Staubabscheidung, insbesondere die Feinstaubabscheidung, leidet. Das Luftführungsmittel kann auch zur Verstärkung der Rotation der Saugluft eingesetzt werden, um die Abscheidewirkung des Wirbelrohrabscheiders zu vergrößern. In diesem Fall kann dadurch, dass die Staubauswurföffnung sich höchstens zu 50% ihrer Höhe über einen Abschnitt des Luftführungsmittels erstreckt, erreicht werden, dass die Verstärkung nicht zu früh stattfindet und folglich der Druckverlust und die Geräuschentwicklung nicht übermäßig ansteigen. Insgesamt erlaubt es die Erfindung also, ein besonders günstiges Verhältnis zwischen Feinstaubabscheidung und Druckverlust zu erreichen und gleichzeitig die Geräuschentwicklung des Wirbelrohrabscheiders vergleichsweise gering zu halten. Auch lässt sich durch die Erfindung wirksam vermeiden, dass sich im Bereich des Luftführungsmittels Haare aus der Saugluft anlagern, die z.B. das Luftführungsmittel umschlingen.

Ein Wirbelrohrabscheider im Sinne der vorliegenden Erfindung ist ein Fliehkraftabscheider, der nach dem Zentrifugal prinzip arbeitet. In einen Abscheideraum des Wirbelrohrabscheiders eintretende Saugluft rotiert auf einer schraubenförmigen Bahn in dem Abscheideraum, wobei aufgrund der Zentrifugalkraft ein Staubanteil der Saugluft von dieser abgetrennt wird und den Abscheideraum durch eine Staubauswurföffnung verlässt. Durch die Staubauswurföffnung gelangt der Staubanteil gewöhnlich in eine Staubsammelbox, die den Staub sammelt und die entleert werden kann. Die von dem Staubanteil befreite Saugluft tritt durch einen Saugluftauslass, der gewöhnlich in ein Tauchrohr mündet, wieder aus dem Abscheideraum aus. Zuvor wird gewöhnlich in Richtung des Saugluftauslasses umgelenkt, z.B. mit Hilfe eines Apexkegels. Die Vorteile der Wirbelrohrabscheider bestehen insbesondere in ihrem einfachen Konstruktionsprinzip und ihrer platzsparenden Bauweise. Beides zusammen ermöglicht bei der Konstruktion eines Staubsaugers eine besonders große Gestaltungsfreiheit. So können Wirbelrohrabscheider insbesondere sowohl stehend als auch liegend oder schräg in den Staubsauger eingebaut werden, ohne dass dies notwendigerweise Einbußen in der Abscheideleistung nach sich zieht. Auch ist der Wirbelrohrabscheider einfach skalierbar, was die Entwicklung und Konstruktion einer Serie von Staubsaugern mit unterschiedlicher Leistung erleichtert.

Ein Staubanteil in der Saugluft ist ein Anteil von Feststoff oder auch als Tropfen fein verteilter Flüssigkeit in der Saugluft, die von dem Wirbelrohrabscheider von der Saugluft abgeschieden werden soll. Wirbelrohrabscheider können gewöhnlich nur einen gewissen Teil solcher Feststoffe oder Flüssigkeiten abscheiden während ein Recht in der Saugluft verbleibt. Folglich ist ein Staubanteil im Sinne der vorliegenden Erfindung nicht notwendigerweise die Gesamtheit theoretisch abtrennbarer Feststoffe und Flüssigkeiten sondern ganz im Gegenteil gewöhnlich nur ein Teil davon.

Ein Apexkegel im Sinne der vorliegenden Erfindung ist ein sich in einer Richtung verjüngendes Gebilde, an dem die Saugluft entlanggleiten kann. Z.B. kann der Apexkegel als gerade oder schiefer Kegel oder Kegelstumpf ausgebildet sein. Ein Apexkegel im Sinne der vorliegenden Erfindung muss also nicht notwendigerweise spitz zulaufen. Auch muss die Mantellinie nicht notwendigerweise eine Gerade sein sondern sie kann auch zur Achse des Apexkegels hin konkav oder von der Achse weg konvex gekrümmt sein. Der Apexkegel kann die Luft eines Außenwirbels des Wirbelrohrabscheiders besonders effektiv in einen Innenwirbel zum Saugluftauslass hin umlenken. Ein bevorzugter Apexkegel ist im Wesentlichen rotationssymmetrisch.

Unter ein Abschnitt des Luftführungsmittels ist im Sinne der vorliegenden Erfindung nur ein Teil des Luftführungsmittels zu verstehen, der tatsächlich eine luftführende Wirkung zur Beeinflussung der Rotation der Saugluft hat, etwa dadurch, dass er flügelförmig ausgebildet ist, wie weiter unten diskutiert. Teile des Luftführungsmittels, die keinen Einfluss auf die Rotation der Saugluft haben, bilden folglich keinen Abschnitt des Luftführungsmittels im Sinne der vorliegenden Erfindung.

Der Abschnitt des Luftführungsmittels, über den sich die Staubauswurföffnung zu dem erfindungsgemäß geforderten Teil ihrer Höhe erstreckt, kann grundsätzlich natürlich auch das gesamte Luftführungsmittel sein, wenn letzteres nicht über die Höhe der Staubauswurföffnung hinausragt. Wie weiter unten ausgeführt sind jedoch Ausführungen der Erfindung bevorzugt, bei denen das Luftführungsmittel sich auch jenseits der Staubauswurföffnung in Richtung des Saugluftauslasses erstreckt. Natürlich erfasst die Erfindung auch Ausführungsformen, bei denen die Staubauswurföffnung sich in ihrer Höhe überhaupt nicht über einen Abschnitt des Luftführungsmittels erstreckt. Vorzugsweise erstreckt sie sich jedoch wenigstens über einen Teil des Luftführungsmittels.

Die Höhe der Staubauswurfsöffnung ist ihre Erstreckung in Richtung der Transportrichtung der Saugluft am Luftführungsmittel. Unter einer Transportrichtung ist die Richtung des Saugluftstroms zu verstehen, in der die Saugluft durch den Abscheideraum vom Sauglufteilass zum Saugluftauslass transportiert wird. Neben einer translatorischen Komponente in die Transportrichtung kann die Saugluft noch eine rotierende Komponente aufweisen. Beide Komponenten zusammen ergeben die schraubenförmige Bahn der Saugluft.

Die Staubauswurföffnung kann erfindungsgemäß auch aus einer Mehrzahl voneinander getrennter Öffnungen bestehen, z.B. einem Schlitz- oder Lochgitter, die im Sinne der vorliegenden Erfindung in ihrer Gesamtheit die Staubauswurföffnung bilden. In diesem Fall ist die Höhe der Stabauswurföffnung die Erstreckung von der Unterkante des untersten zur Oberkante der obersten Öffnung.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

Vorzugsweise erstreckt sich die Staubauswurföffnung höchstens zu 30% ihrer Höhe über einen Abschnitt des Luftführungsmittels, besonders vorzugsweise höchstens zu 20; die Staubauswurföffnung erstreckt sich vorzugsweise zu mindestens 10% über einen Abschnitt des Luftführungsmittels.

In einer bevorzugten Ausführung der Erfindung ist der Apexkegel so angeordnet und ausgebildet, dass er die Saugluft von einem äußeren in einen inneren Bereich des Abscheideraums lenkt. Das Luftführungsmittel ist vorzugsweise in dem inneren Bereich des Abscheideraums angeordnet. Ein innerer Bereich des Abscheideraums im Sinne der vorliegenden Erfindung ist ein Bereich der in die Richtungen senkrecht zur Transportrichtung nicht bis zur Wand des Abscheideraums reicht. Der innere Bereich ist von einem äußeren zur Wand reichenden Bereich umschlossen.

Der innere und der äußere Bereich verlaufen vorzugsweise in Transportrichtung der Saugluft entlang des Abscheideraums. In einem bevorzugten Wirbelrohrabscheider verläuft die Transportrichtung des Innenwirbels gerade entgegengesetzt zu der des Außenwirbels. Vorzugsweise wird hierzu wird die Saugluft an dem Apexkegel um im Wesentlichen 180° (bezogen auf einen Vollkreis von 360°) umgelenkt.

Der Abscheideraum des bevorzugten Wirbelrohrabscheiders ist rohrförmig ausgebildet, wobei das Rohr ganz oder abschnittsweise zylindrisch, sich konisch verjüngend oder sich konisch aufweitend ausgebildet sein kann. Der Abscheideraum ist vorzugsweise im Wesentlichen rotationssymmetrisch. Besonders vorzugsweise hat er eine im Wesentlichen kreisförmige Querschnittsfläche. Die Stirnseiten des Abscheideraums sind vorzugsweise verschlossen.

Die bevorzugte Staubauswurföffnung ist in einer Wand des Abscheideraums angeordnet, vorzugsweise in einer Mantelfläche des Rohrs. Besonders vorzugsweise reicht sie bis an eine Stirnseite des Abscheideraums heran.

Um die in den Abscheideraum eintretende Saugluft in Rotation zu versetzen, ist vorzugsweise ein Lufteinleitmittel vorgesehen. Das Lufteinleitmittel kann eine oder mehrere Komponenten außerhalb des Abscheideraums umfassen, z. B. einen Sauglufteinlasskanal, der in den Sauglufteinlass des Abscheideraums mündet. Der Kanal mündet besonders vorteilhaft tangential in den Abscheideraum ein. Das Lufteinlassmittel kann aber auch eine oder mehrere Komponenten innerhalb des Abscheideraums umfassen, z.B. eine Luftleitrampe, die die Saugluft entlang gleiten kann, um auf eine schraubenförmige Bahn gelenkt zu werden.

Ein bevorzugtes Luftführungsmittel reicht zu 80% oder mehr der Distanz, die sich von der Höhe des Sauglufteinlassseitigen Rands der Staubauswurföffnung zum Saugluftauslass erstreckt, an den Sauglufteinlass heran. Dadurch ist vorteilhaft erreichbar, dass die vom Apexkegel umgelenkte Luft bis kurz vor den Sauglufteinlass hingeleitet wird. Die Rotation der Saugluft im inneren Bereich kann dadurch besonders vorteilhaft gebremst werden. Außerdem kann vermieden werden, dass die Saugluft im inneren Bereich einen Drehimpuls von der im äußeren Bereich rotierenden Saugluft aufnimmt. Besonders vorzugsweise erstreckt sich das Luftführungsmittel bis zur Höhe des Sauglufteinlasses, d.h. es reicht an die Höhe des Sauglufteinlasses heran.

Bei einer bevorzugten Ausführung der Erfindung reicht ein Tauchrohr in den Abscheideraum hinein. Das Ende des Tauchrohrs bildet in diesem Fall den Saugluftauslass. Ein bevorzugtes Luftführungsmittel erstreckt sich in das Tauchrohr hinein. Besonders vorzugsweise erstreckt sich das Luftführungsmittel zu maximal einem Drittel der Länge des Tauchrohrs in dieses hinein. Durch diese Ausführung der Erfindung können Wirbel in dem Tauchrohr besonders effektiv vermieden werden. Dies kann zu einer Reduzierung des Druckverlusts im Tauchrohr und damit zu einer Verbesserung des Verhältnisses zwischen Staubabscheidung und Druckverlust beitragen. Auch kann vorteilhafterweise eine Geräuschreduzierung in dem Tauchrohr erreicht werden.

Das bevorzugte Luftführungsmittel umfasst ein flächenartiges Element, z. B. ein Blatt, eine Schaufel, eine Platte oder einen Flügel. Das bevorzugte flächenartige Element weist in Transportrichtung der Saugluft eine lineare, progressive oder degressive Steigung auf. Insbesondere erstreckt sich das bevorzugte flächenartige Element in die Transportrichtung schraubenförmig. Das bevorzugte flächenartige Element ist schaufelförmig ausgebildet, d.h. es ist im Querschnitt senkrecht zur Transportrichtung gekrümmt ausgeformt.

Vorteilhafterweise umfasst das Luftführungsmittel mehrere flächenartige Elemente, z. B. zwei, drei oder vier flächenartige Elemente, vorzugsweise von der vorbeschriebenen Art. Dadurch können benachbarte flächenartige Elemente des Luftführungsmittels gerade oder schraubenartig in Richtung Saugluftauslass verlaufender Kanäle ausbilden, die sich besonders gut zum Beeinflussen der Rotation der Saugluft eignen. Durch die lineare, progressive oder degressive Steigung der flächenartigen Elemente und die im Falle mehrerer flächenartiger Elemente ausgebildeten schraubenartigen Kanäle ist eine besonders sanfte Umlenkung und Abschwächung der Rotation der Saugluft möglich.
Das bevorzugte Luftführungsmittel bildet, im geometrischen Sinne, eine Durchdringung des Apexkegels mit dem oder den flächenartigen Elementen. Mit anderen Worten: Das Luftführungsmittel oder ein Teil des Luftführungsmittel, z.B. das oder die die flächenartigen Elemente, ragen, unmittelbar aus dem Apexkegel heraus, vorzugsweise aus der Mantelfläche des Apexkegels. Allerdings sind auch Ausführungen der Erfindung denkbar, in denen das Luftführungsmittel von den Mantelflächen des Apexkegels beabstandet ist. Zum Beispiel kann das Luftführungsmittel auf die Spitze oder Deckfläche des Apexkegels aufgesetzt sein, ggf. auch beabstandet durch einen Stift.

In einer bevorzugten Ausführung der Erfindung nimmt ein Hüllkreisdurchmesser der Luftführungsmittel-Querschnittsfläche, die senkrecht zur saugluftauslassweisenden Richtung verläuft, in Richtung des Saugluftauslasses ab. Mit anderen Worten, die Hüllfläche des Luftführungsmittels verjüngt sich in Richtung Saugluftauslass. Hierdurch lässt sich bei gegebener Größe des Luftführungsmittels eine besonders effektive Abschwächung der Rotation der Saugluft erreichen. Auch kann die Bildung von sekundärwirbeln an den Kanten flächenartiger Elemente des Luftführungsmittels entgegengewirkt werden.

Besonders vorzugsweise ist der maximale Hüllkreisdurchmesser der Luftführungsmittel-Querschnittsfläche, die senkrecht zur zum Saugluftauslass weisenden Richtung verläuft, nicht größer als der Außendurchmesser des Tauchrohrs. Hierdurch ist vorteilhafterweise vermeidbar, dass die Saugluft im äußeren Bereich in ihrer Rotation durch das Luftführungsmittel beeinträchtigt wird. Letzteres könnte sonst die Staubabscheidung ungünstig beeinflussen und damit das Verhältnis zwischen Staubabscheidung und Druckverlust und/oder Geräuschentwicklung verschlechtern.

In einer Ausführung der Erfindung ist das Luftführungsmittel stationär in dem Wirbelrohrabscheider angeordnet. In einer anderen Ausführung der Erfindung ist zumindest ein Teil des Luftführungsmittels beweglich, vorzugsweise rotierbar in dem Wirbelrohrabscheider angeordnet. Besonders vorzugsweise sind das Teil ein oder mehrere flächenartige Elemente des Luftführungsmittels. Der rotierbar angeordnete Teil des Luftführungsmittels wird in einer Ausführung der Erfindung durch die Saugluft angetrieben. Er kann dadurch seinerseits z. B. einen Filterreiniger des Staubsaugers antreiben, um einen Staubsaugerfilter zu reinigen. Es kann aber z. B. auch einen Generator antreiben, der aus der Rotationsenergie der Saugluft elektrische Energie erzeugt, besonders vorzugsweise um eine andere Einrichtung des Staubsaugers zu betreiben. Umgekehrt sind auch Ausführungen der Erfindung denkbar, bei denen der rotierbare Teil des Luftführungsmittels nicht durch die Saugluft sondern ein anderes Mittel, z. B. durch einen Motor, vorzugsweise einen elektrischen Motor, in Rotation versetzt wird.

Besonders vorzugsweise dreht sich der rotierbare Teil des Luftführungsmittels entgegen der Rotationsrichtung der Saugluft. Hierdurch lässt sich eine besonders effektive Abschwächung der Rotation der Saugluft erreichen und dadurch der Druckverlust weiter reduzieren. Umgekehrt ist es auch denkbar, den rotierbaren Teil in Rotationsrichtung der Saugluft zu drehen, um dadurch die Abscheideleistung des Wirbelrohrabscheiders zu erhöhen.

Mit der Erfindung kann vorteilhafterweise das Verhältnis von Staubabscheidung, insbesondere Feinstaubabscheidung, und Druckverlust verbessert werden. Außerdem kann das Verhältnis zwischen Staubabscheidung und Geräuschentwicklung verbessert werden.

### Kurzbeschreibung der Zeichnungen

Weitere vorteilhafte Ausgestaltungen werden nachfolgend an Hand der in den Zeichnungen dargestellten Ausführungsbeispiele, auf das die Erfindung jedoch nicht beschränkt ist, näher beschrieben.

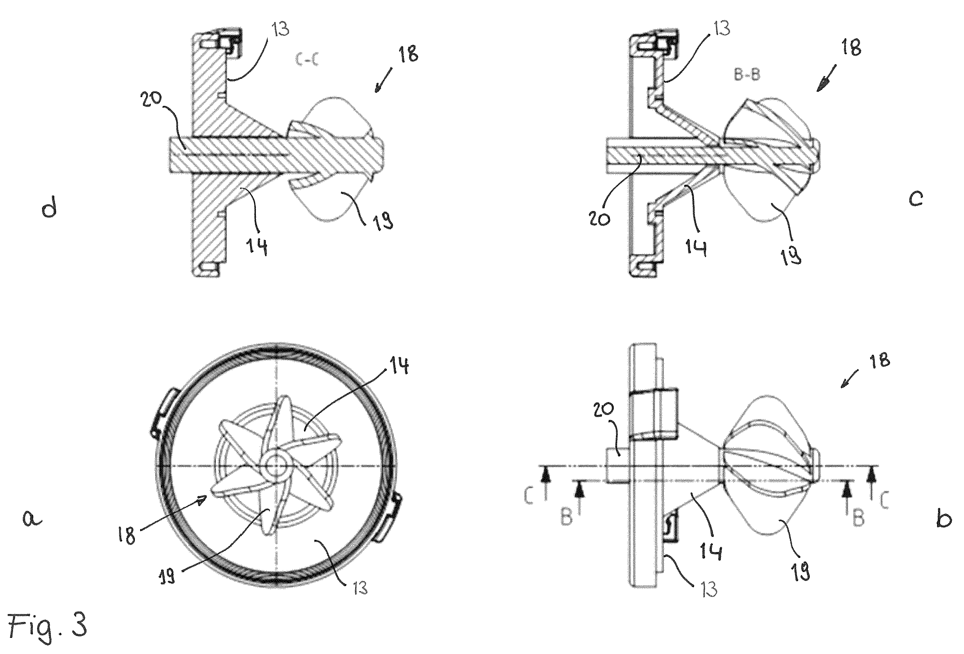

Es zeigen schematisch:

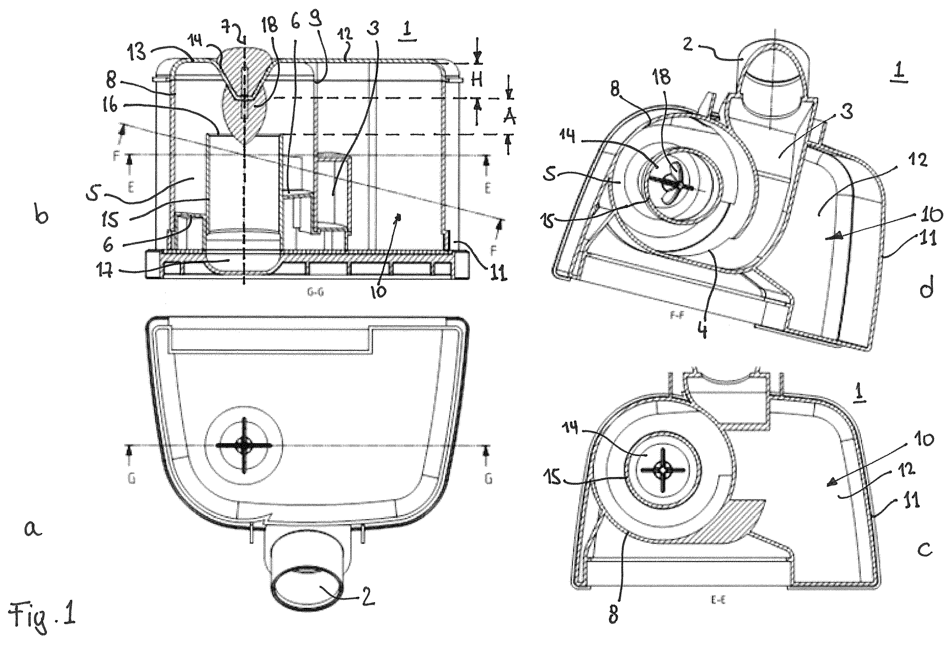

- Fig. 1: in Teilfigur a einen erfindungsgemäßen Wirbelrohrabscheider von oben; in Teilfigur b einen Querschnitt durch die in Teilfigur a eingezeichnete Ebene G-G, wobei eine erste Ausführung eines an einem Apexkegel angeordneten Luftführungsmittels dargestellt ist; in Teilfigur c einen Querschnitt durch die in Teilfigur b eingezeichnete Ebene E-E und in Teilfigur d einen Querschnitt durch die in Teilfigur b dargestellte Ebene F-F;

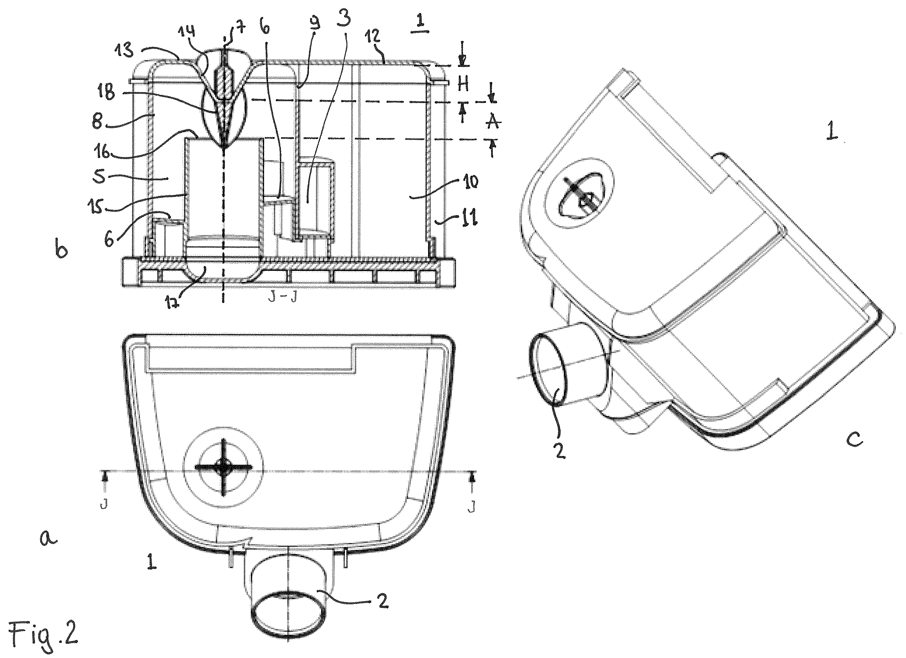

- Fig. 2: in Teilfigur a den schon in Figur 1 dargestellten Wirbelrohrabscheider von oben; in Teilfigur b einen Querschnitt durch die in Teilfigur a angegebene Ebene J-J und in Teilfigur c eine perspektivische Ansicht des Wirbelrohrabscheiders;
und schließlich
- Fig. 3: in Teilfigur a eine zweite Ausführung eines Luftführungsmittels von oben; in Teilfigur b das in Teilfigur a dargestellte Luftführungsmittel in einer Seitenansicht; in Teilfigur c einen Querschnitt durch die in Teilfigur b dargestellte Ebene B-B; und in Teilfigur d einen Querschnitt durch die in Teilfigur b eingezeichnete Ebene C-C.

### Ausführliche Beschreibung anhand von Ausführungsbeispielen

Bei der nachfolgenden Beschreibung bevorzugter Ausführungsformen der vorliegenden Erfindung bezeichnen gleiche Bezugszeichen gleiche oder vergleichbare Komponenten.

Figuren 1 und 2 zeigen in insgesamt sieben unterschiedlichen Ansichten eine Ausführungsform des erfindungsgemäßen Wirbelrohrabscheiders 1 für einen Staubsauger. Der Wirbelrohrabscheider 1 ist in dem Staubsauger typischerweise einer Saugluftführung, die dem Wirbelrohrabscheider 1 staubbeladene Saugluft zuführt, nachgeschaltet, und einer Motor-Gebläse-Einheit zum Erzeugen eines Saugluftstroms vorgeschaltet. Dabei können zwischen Saugluftführung und Wirbelrohrabscheider 1 und/oder auch zwischen Wirbelrohrabscheider 1 und Motor-Gebläse-Einheit eine oder mehrere weitere Einrichtungen geschaltet sein, z. B. Filter.

Die staubbeladene Saugluft gelangt an einen Saugluftstutzen 2 in einem Sauglufteinlasskanal 3 des Wirbelrohrabscheiders 1 und wird von dort tangential durch einen Sauglufteinlass 4 in den kreiszylinderrohrförmigen Abscheideraum 5 geführt. Dort bringt eine schraubenförmige Luftleitrampe 6 die Saugluft auf eine schraubenförmige Bahn in dem Abscheideraum 5. Folglich hat die Saugluft im Abscheideraum 5 einen rotierenden Bewegungsanteil um eine Mittelachse 7 des Abscheideraums 5 herum und einen translatorischen Anteil in einer Richtung parallel zur Mittelachse 7. Die durch den Rotationsanteil der Saugluftbewegung verursachte Zentrifugalkraft scheidet einen Staubanteil der Saugluft in Richtung des Mantels 8 des Abscheideraums 5 ab. Gleichzeitig werden die Staubpartikel durch den translatorischen Anteil der Saugluftbewegung in Längsrichtung des Abscheideraums zu dem dem Sauglufteinlass 4-Ende gegenüberliegenden Ende des Abscheideraums 5 bewegt. Dort befindet sich im Mantel 8 des Abscheideraums 5 eine Staubauswurföffnung 9, durch die der abgeschiedene Staub in einen an den Abscheideraum 5 angrenzenden Staubsammelraum 10 gelangen kann, wo der Staub gelagert wird.

Der Wirbelrohrabscheider 1 ist in dem Staubsauger entnehmbar vorgesehen und außerdem zweiteilig mit einem Wirbelrohrabscheiderkorpus 11 und einem Wirbelrohrabscheiderdeckel 12 ausgebildet. Deshalb kann der Wirbelrohrabscheider 1 aus dem Staubsauger entnommen und durch Abnehmen des Deckels 12 geöffnet werden, wobei insbesondere auch der Staubsammelraum 10 zum Entleeren geöffnet werden kann. Nach dem Leeren kann der Deckel 12 wieder auf den Korpus 11 aufgesetzt und der Wirbelrohrabscheider 1 wieder in den Staubsauger eingesetzt werden.

Auf der Staubauswurfsöffnungsseitigen Endfläche 13 des Abscheideraums 5 ist außerdem ein Apexkegel 14 vorgesehen, der die Saugluft in Richtung eines in ein Tauchrohr 15 mündenden Saugluftauslasses 16 leitet. Durch den Saugluftauslass 16 gelangt die von dem Staubanteil befreite Saugluft aus dem Abscheideraum 5 heraus und wird durch einen Saugluftauslasskanal 17 aus dem Wirbelrohrabscheider 5 heraus in Richtung in Richtung Motor-Gebläse-Einheit geleitet. Dazu wird die Saugluft, unterstützt durch den Apexkegel 14, vom Äußeren des Abscheideraums 5 in dessen Inneres gelenkt und dabei die Transportrichtung der Saugluft gerade umgekehrt. Der Apexkegel 14 ist als Kegelstumpf mit einer geraden Mantellinie ausgebildet. Aus dem Apexkegel 14 stehen vier flächenförmige Elemente hervor, die ein Luftführungsmittel 18 zum Beeinflussen der Rotation der Saugluft bilden. Luftführungsmittel 18 und Apexkegel 14 bilden also im geometrischen Sinne eine Durchdringung. Das Luftführungsmittel 18 ist an dem Apexkegel 14 mit Hilfe eines Stifts gehalten, der die Deckfläche des Apexkegels durchdringt und auf einer Apexkegelinnenseite durch ein kreuzförmiges Gegenstück gesichert ist.

Das Luftführungsmittel 18 ist rotierbar an dem Apexkegel angeordnet. In einer Ausführung der Erfindung wird es über den Stift von einem Motor (nicht dargestellt) angetrieben. Die Drehrichtung des Luftführungsmittels 18 ist in einer Ausführung der Erfindung entgegen der Drehrichtung der Saugluft. Dadurch kann der Rotationsanteil der Saugluft besonders effektiv abgeschwächt werden. Dadurch, dass die Abschwächung im Wesentlichen erst dann geschieht, wenn der Staub bereits durch die Staubauswurföffnung 9 abgeschieden worden ist, hat sie nur einen geringen oder keinen Einfluss auf die Abscheideleistung des Wirbelrohrabscheiders. Gleichzeitig führt die Abschwächung der Rotation jedoch zu einer Verringerung des Druckverlustes und Verringerung der Geräuschentwicklung, insbesondere auch in dem nachfolgenden Tauchrohr15.

Eine besonders effektive Abschwächung der Rotation gelingt dadurch, dass das Luftführungsmittel 18 sogar durch den Saugluftauslass 16 in das Tauchrohr 15 hineinreicht. Es ist aber auch möglich, den Motor, der das Luftführungsmittel 18 antreibt, in umgekehrter Richtung, also entgegen der Rotationsrichtung der staubbeladenen Saugluft zu betreiben. In diesem Fall kann die Abscheideleistung des Wirbelrohrabscheiders 1 erhöht werden, wobei allerdings ein erhöhter Druckverlust und eine erhöhte Geräuschentwicklung in Kauf genommen werden müssen.

In den Figuren 1 und 2 ist auch die Höhe H der Staubauswurföffnung 9 im Mantel 8 des kreiszylinderrohrförmigen Abscheideraums 5 dargestellt. Es ist zu sehen, dass das Luftführungsmittel 18 zu weniger als der Hälfte der Höhe H in die Staubauswurföffnung 9 hineinreicht, sich die Staubauswurföffnung 9 also zu weniger als der Hälfte ihrer Höhe über einen Abschnitt des Luftführungsmittels 18 erstreckt. Weiter erstreckt sich das Luftführungsmittel 18 über die gesamte Höhe vom saugluftanlassseitigen Rands der Staubauswurföffnung 9 bis hin zum Saugluftauslass 16 und sogar noch darüber hinaus in das Tauchrohr 15 hinein.

Eine alternative Ausführung des Luftführungsmittels ist in Figur 3 dargestellt. Dabei ist das Luftführungsmittel 18 auf die Deckfläche des Apexkegels 14 aufgesetzt, es steht also kein Teil des Luftführungsmittels aus der Mantelfläche hervor. Das Luftführungsmittel 18 besteht aus einer Vielzahl von flächenförmigen Elementen 19, die bezüglich der Längsachse des Luftführungsmittels geneigt sind. Mit Hilfe eines Stifts 20 des Luftführungsmittels 18, der durch die Deckfläche des Apexkegels 14 dringt, kann das Luftführungsmittel 18 mit einem Motor angetrieben werden. Alternativ kann das Luftführungsmittel 18 aber auch selbst eine Einrichtung, z. B. ein Dynamogerät zur Stromerzeugung oder einen Filterabreiniger für einen Filter des Staubsaugers oder des Wirbelrohrabscheiders 1 betreiben. Die Hüllkreisdurchmesser der Luftführungsmittel-Querschnittsflächen, die senkrecht zur zum Saugluftauslass 16 weisenden Richtung verlaufen, nehmen ausgehend von der Stirnfläche 13 des Abscheideraums in Richtung Saugluftauslass 16 zunächst zu und dann wieder ab. An der Stelle seines größten Umfangs weist der Hüllkreis einen Durchmesser auf, der gerade dem Durchmesser des Saugluftauslasses 16 entspricht.

Mit der Erfindung kann vorteilhafterweise das Verhältnis von Staubabscheidung, insbesondere Feinstaubabscheidung, und Druckverlust verbessert werden. Außerdem kann das Verhältnis zwischen Staubabscheidung und Geräuschentwicklung verbessert werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Wirbelrohrabscheider
- 2: Saugluftstutzen
- 3: Sauglufteinlasskanal
- 4: Sauglufteinlass
- 5: Abscheideraum
- 6: Luftleitrampe
- 7: Mittelachse
- 8: Mantel des Abscheideraums
- 9: Staubauswurföffnung
- 10: Staubsammelraum
- 11: Wirbelrohrabscheiderkorpus
- 12: Wirbelrohrabscheiderdeckel
- 13: Staubauswurfsöffnungsseitigen Endfläche des Abscheideraums
- 14: Apexkegel
- 15: Tauchrohr
- 16: Saugluftauslass
- 17: Saugluftauslasskanal
- 18: Luftführungsmittel
- 19: flächenförmige Elemente des Luftführungsmittels
- 20: Stift
- A: Abstand
- H: Höhe (der Staubauswurföffnung 8)

## Patentansprüche

1. Wirbelrohrabscheider (1) für einen Staubsauger umfassend: einen Abscheideraum (5), in dem Saugluft des Staubsaugers auf einer Schraubenbahn rotieren kann, einen Sauglufteinlass (4), durch den mit Staubpartikeln beladene Saugluft in den Abscheideraum (5) eintreten kann, eine Staubauswurföffnung (9), durch die ein mittels Zentrifugalkraft von der rotierenden Saugluft abgeschiedener Staubanteil der Saugluft aus dem Abscheideraum (5) austreten kann, einen Saugluftauslass (16), durch den die von dem Staubanteil befreite Saugluft aus dem Abscheideraum (5) austreten kann, und einen Apexkegel (14), um aus der Richtung des Sauglufteinlasses (4) kommende Saugluft in Richtung des Saugluftauslasses (16) umzulenken, wobei an dem Apexkegel (14) ein Luftführungsmittel (18) zum Beeinflussen der Rotation der Saugluft angeordnet ist, **dadurch gekennzeichnet, dass** die Staubauswurföffnung (9) eine Höhe (H) in Richtung des Saugluftauslasses (16) aufweist und die Staubauswurföffnung (9) sich höchstens zu 50% ihrer Höhe (H) über einen Abschnitt des Luftführungsmittels (18) erstreckt.

2. Wirbelrohrabscheider (1) nach Anspruch 1, **dadurch gekennzeichnet, dass** der Apexkegel (14) so angeordnet und ausgebildet ist, dass er die Saugluft von einem äußeren in einen inneren Bereich des Abscheideraums (15) lenkt und das Luftführungsmittel (18) in dem inneren Bereich angeordnet ist.

3. Wirbelrohrabscheider (1) nach Anspruch 1 oder 2, **dadurch gekennzeichnet, dass** das Luftführungsmittel (18) zu 80% oder mehr des Abstands (A), der sich von der Höhe (H) des sauglufteinlassseitigen Rands der Staubauswurföffnung (9) zum Saugluftauslass (16) erstreckt, an den Saugluftauslass (16) heranreicht.

4. Wirbelrohrabscheider (1) nach Anspruch 1 oder 2, **dadurch gekennzeichnet, dass** das Luftführungsmittel (18) sich bis zur Höhe des Saugluftauslasses (16) erstreckt.

5. Wirbelrohrabscheider (1) nach Anspruch 1 oder 2, **dadurch gekennzeichnet, dass** der Saugluftauslass (16) in ein Tauchrohr (15) mündet und das Luftführungsmittel (18) sich in das Tauchrohr (15) hinein erstreckt.

6. Wirbelrohrabscheider (1) nach einem der Ansprüche 1 bis 5, **dadurch gekennzeichnet, dass** das Luftführungsmittel (18) zumindest ein flächenartiges Element (19) umfasst.

7. Wirbelrohrabscheider (1) nach Anspruch 6, **dadurch gekennzeichnet, dass** das flächenartige Element (19) schaufelartig ausgebildet ist und das Element (19) eine lineare, progressive oder degressive Steigung besitzt.

8. Wirbelrohrabscheider (1) nach Anspruch 6 oder 7, **dadurch gekennzeichnet, dass** das Luftführungsmittel (18) aus einer Durchdringung des Apexkegels (14) mit zumindest einem flächenartigen Element (19) gebildet ist.

9. Wirbelrohrabscheider (1) nach einem der vorherigen Ansprüche, **dadurch gekennzeichnet, dass** in einem dem Saugluftauslass (16) zugewandten Endabschnitt des Luftführungsmittels (18) der Hüllkreisdurchmesser der Luftführungsmittel-Querschnittsfläche, die senkrecht zur zum Saugluftauslass (16) weisenden Richtung verläuft, in Richtung Saugluftauslass (16) abnimmt.

10. Wirbelrohrabscheider (1) nach einem der vorherigen Ansprüche, **dadurch gekennzeichnet, dass** der Saugluftauslass (16) in ein Tauchrohr (15) mündet und der maximale Hüllkreisdurchmesser der Luftführungsmittel-Querschnittsfläche, die senkrecht zur zum Saugluftauslass (16) weisenden Richtung verläuft, nicht größer als der Außendurchmesser des Tauchrohres (15) ist.

11. Wirbelrohrabscheider (1) nach einem der vorherigen Ansprüche, **dadurch gekennzeichnet, dass** zumindest ein Teil des Luftführungsmittels (18) rotierbar angeordnet ist.

12. Wirbelrohrabscheider (1) nach Anspruch 11, **dadurch gekennzeichnet, dass** der rotierbare Teil des Luftführungsmittels (18) durch die Saugluft antreibbar ist.

13. Wirbelrohrabscheider (1) nach Anspruch 11 oder 12, **dadurch gekennzeichnet, dass** der rotierbare Teil des Luftführungsmittels (18) sich mit der Rotationsrichtung der Saugluft dreht.

14. Wirbelrohrabscheider (1) nach Anspruch 11, **dadurch gekennzeichnet, dass** der rotierbare Teil des Luftführungsmittels (18) sich gegen die Rotationsrichtung der Saugluft dreht.

## Claims

1. Swirl tube separator (1) for a vacuum cleaner comprising: a separation chamber (5), in which suction air from the vacuum cleaner can rotate on a helical path, a suction air inlet (4), through which suction air loaded with dust particles can enter into the separation chamber (5), a dust ejection opening (9), through which a dust content of the suction air separated from the rotating suction air by means of centrifugal force can leave the separation chamber (5), a suction air outlet (16), through which the suction air freed of the dust content can leave the separation chamber (5), and an apex cone (14) in order to deflect suction air coming from the direction of the suction air inlet (4) in the direction of the suction air outlet (16), wherein an air guiding means (18) is arranged on the apex cone (14) in order to influence the rotation of the suction air, **characterised in that** the dust ejection opening (9) has a height (H) in the - direction of the suction air outlet (16) and the dust ejection opening (9) extends at most to 50% of its height (H) across a section of the air guiding means (18).

2. Swirl tube separator (1) according to claim 1, **characterised in that** the apex cone (14) is arranged and embodied such that it guides the suction air from an outer into an inner region of the separation chamber (15) and the air guiding means (18) is arranged in the inner region.

3. Swirl tube separator (1) according to claim 1 or 2, **characterised in that** the air guiding means (18) approaches 80% or more of the distance (A), which extends from the height (H) of the suction air inlet-side edge of the dust ejection opening (9) to the suction air outlet (16), at the suction air outlet (16).

4. Swirl tube separator (1) according to claim 1 or 2, **characterised in that** the air guiding means (18) extends up to the height of the suction air outlet (16).

5. Swirl tube separator (1) according to claim 1 or 2, **characterised in that** the suction air outlet (16) opens into a dip tube (15) and the air guiding means (18) extends into the dip tube (15).

6. Swirl tube separator (1) according to one of claims 1 to 5, **characterised in that** the air guiding means (18) includes at least one flat element (19).

7. Swirl tube separator (1) according to claim 6, **characterised in that** the flat element (19) is embodied in the manner of a scoop and the element (19) has a linear, progressive or degressive gradient.

8. Swirl tube separator (1) according to claim 6 or 7, **characterised in that** the air guiding means (18) is formed from a penetration of the apex cone (14) with at least one flat element (19).

9. Swirl tube separator (1) according to one of the preceding claims, **characterised in that** in an end section of the air guiding means (18) facing the suction air outlet (16), the surrounding diameter of the air guiding means cross-sectional surface, which runs at right angles to the direction pointing towards the suction air outlet (16), reduces in the direction of the suction air outlet (16).

10. Swirl tube separator (1) according to one of the preceding claims, **characterised in that** the suction air outlet (16) opens into a dip tube (15) and the maximum surrounding diameter of the air guiding means cross-sectional surface, which runs at right angles to the direction pointing towards the suction air outlet (16), is no larger than the outer diameter of the dip tube (15).

11. Swirl tube separator (1) according to one of the preceding claims, **characterised in that** at least part of the air guiding means (18) is arranged to be rotatable.

12. Swirl tube separator (1) according to claim 11, **characterised in that** the rotatable part of the air guiding means (18) can be powered by the suction air.

13. Swirl tube separator (1) according to claim 11 or 12, **characterised in that** the rotatable part of the air guiding means (18) rotates with the direction of rotation of the suction air.

14. Swirl tube separator (1) according to claim 11, **characterised in that** the rotatable part of the air guiding means (18) rotates counter to the direction of rotation of the suction air.

## Revendications

1. Séparateur à tube Vortex (1) pour un aspirateur, comprenant : une chambre de séparation (5) dans laquelle de l'air aspiré de l'aspirateur peut être mis en rotation sur une trajectoire hélicoïdale, une entrée d'air aspiré (4) à travers laquelle l'air aspiré chargé de particules de poussière peut entrer dans la chambre de séparation (5), une ouverture d'évacuation de la poussière (9) à travers laquelle une fraction de poussière de l'air aspiré, séparée de l'air aspiré en rotation au moyen de force centrifuge, peut sortir de la chambre de séparation (5), une sortie d'air aspiré (16) à travers laquelle l'air aspiré débarrassé de la fraction de poussière peut sortir de la chambre de séparation (5), et un apex de cône (14) destiné à dévier en direction de la sortie d'air aspiré (16) l'air aspiré en provenance de la direction de l'entrée d'air aspiré (4), un moyen de guidage d'air (18) étant disposé sur l'apex de cône (14) pour influencer la rotation de l'air aspiré, **caractérisé en ce que** l'ouverture d'évacuation de la poussière (9) présente une hauteur (H) en direction de la sortie d'air aspiré (16) et **en ce que** l'ouverture d'évacuation de la poussière (9) s'étend au maximum sur 50 % de sa hauteur (H) sur une section du moyen de guidage d'air (18).

2. Séparateur à tube Vortex (1) selon la revendication 1, **caractérisé en ce que** l'apex de cône (14) est disposé et réalisé de manière à ce qu'il guide l'air aspiré à partir d'une zone extérieure dans une zone intérieure de la chambre de séparation (15) et **en ce que** le moyen de guidage d'air (18) est disposé dans la zone intérieure.

3. Séparateur à tube Vortex (1) selon la revendication 1 ou 2, **caractérisé en ce que** le moyen de guidage d'air (18) s'approche de la sortie de l'air aspiré (16) de 80% ou plus de l'écart (A) qui s'étend de la hauteur (H) du bord, côté entrée de l'air aspiré, de l'ouverture d'évacuation de la poussière (9) vers la sortie de l'air aspiré (16).

4. Séparateur à tube Vortex (1) selon la revendication 1 ou 2, **caractérisé en ce que** le moyen de guidage d'air (18) s'étend jusqu'à la hauteur de la sortie de l'air aspiré (16).

5. Séparateur à tube Vortex (1) selon la revendication 1 ou 2, **caractérisé en ce que** la sortie de l'air aspiré (16) aboutit dans un tube plongeur (15) et **en ce que** le moyen de guidage d'air (18) s'étend en entrant dans le tube plongeur (15).

6. Séparateur à tube Vortex (1) selon l'une quelconque des revendications 1 à 5, **caractérisé en ce que** le moyen de guidage d'air (18) comprend au moins un élément plan (19).

7. Séparateur à tube Vortex (1) selon la revendication 6, **caractérisé en ce que** l'élément plan (19) est réalisé en forme de pelle et **en ce que** l'élément (19) possède une inclinaison linéaire progressive ou dégressive.

8. Séparateur à tube Vortex (1) selon la revendication 6 ou 7, **caractérisé en ce que** le moyen de guidage d'air (18) est formé à partir d'une pénétration de l'apex de cône (14) par au moins un élément plan (19).

9. Séparateur à tube Vortex (1) selon l'une quelconque des revendications précédentes, **caractérisé en ce que** dans une section terminale du moyen de guidage d'air (18), tournée vers la sortie de l'air aspiré (16), le diamètre de l'enveloppe circulaire de la surface de la section transversale du moyen de guidage d'air, qui s'étend perpendiculairement à la direction montrant vers la sortie de l'air aspiré (16), diminue en direction de la sortie de l'air aspiré (16).

10. Séparateur à tube Vortex (1) selon l'une quelconque des revendications précédentes, **caractérisé en ce que** la sortie de l'air aspiré (16) aboutit dans un tube plongeur (15) et **en ce que** le diamètre maximal de l'enveloppe circulaire de la surface de la section transversale du moyen de guidage d'air, qui s'étend perpendiculairement à la direction montrant vers la sortie de l'air aspiré (16), n'est pas plus grand que le diamètre extérieur du tube plongeur (15).

11. Séparateur à tube Vortex (1) selon l'une quelconque des revendications précédentes, **caractérisé en ce qu'**au moins une partie du moyen de guidage d'air (18) est disposée de manière rotative.

12. Séparateur à tube Vortex (1) selon la revendication 11, **caractérisé en ce que** la partie rotative du moyen de guidage d'air (18) peut être entraînée par l'air aspiré.

13. Séparateur à tube Vortex (1) selon la revendication 11 ou 12, **caractérisé en ce que** la partie rotative du moyen de guidage d'air (18) tourne dans le sens de rotation de l'air aspiré.

14. Séparateur à tube Vortex (1) selon la revendication 11, **caractérisé en ce que** la partie rotative du moyen de guidage d'air (18) tourne dans le sens inverse de rotation de l'air aspiré.
